# FASCICULE DE BREVET EUROPEEN

(11) **EP 0 830 318 B1**
(45) Date de publication et mention de la délivrance du brevet: **21.05.2003**
(21) Numéro de dépôt: 97919430.5
(22) Date de dépôt: 27.03.1997
(51) Int. Cl.: C03B 18/06

(54) **PROCEDE DE FABRICATION DE VERRE EN FEUILLE PAR FLOTTAGE**
VERFAHREN ZUM HERSTELLEN VON FLOATGLASSCHEIBEN
METHOD FOR PRODUCING GLASS SHEETS USING FLOTATION

(30) Priorité: 05.04.1996 FR 9604369
(43) Date de publication de la demande: 25.03.1998
(73) Titulaire: SAINT-GOBAIN GLASS FRANCE, 92400 Courbevoie (FR)
(72) Inventeur: COURTEMANCHE, Gilles, F-75013 Paris (FR); COQUILLON, Michel, F-77124 Chauconin-Neufmontiers (FR)
(74) Mandataire: Goldenberg, Virginie Isabelle
(86) Numéro de dépôt international: FR9700555
(87) Numéro de publication internationale: WO97037945

(56) Documents cités:
- FR-A- 2 123 096
- FR-A- 2 150 249

## Description

La présente invention concerne un procédé de fabrication par flottage de feuilles de verre destinées à la réalisation de vitrages.

La fabrication de verre en feuille par flottage se fait de façon connue en déversant du verre fondu sur un support liquide (ou « bain ») plus dense que le verre (par exemple un bain d'étain) et en faisant avancer sur la surface du bain le ruban de verre qui se forme avant de découper en feuilles ledit ruban figé par refroidissement.

Un procédé courant consiste à entraîner le ruban de verre sur la surface du bain en l'agrippant latéralement par des molettes (ou « top-rolls ») positionnées le long du bain de part et d'autre du ruban de verre. Les installations utilisant ce procédé sont généralement des installations à fort débit (jusqu'à quelques centaines de tonnes de verre par jour) et sont adaptées à la production de feuilles de verre de plusieurs millimètres d'épaisseur. Un tel procédé présente certains inconvénients : en particulier, l'énergie consommée est importante (nécessité, entre autres, de refroidir toutes les molettes sur la longueur du bain), les bordures latérales du ruban marquées par les molettes doivent être ôtées ce qui implique une perte de matière non négligeable du fait de l'encombrement des molettes, et l'on observe un phénomène de striction du ruban de verre à la sortie des dernières molettes, cette striction pouvant engendrer des défauts, notamment optiques, sur le verre. La striction observée avec un tel procédé augmente en outre lorsque l'épaisseur de la feuille produite diminue et peut être rédhibitoire dans la production de feuilles de verre minces (d'épaisseur inférieure par exemple à 3 mm). De la même façon, la largeur des bandes latérales marquées par les molettes augmente lorsque l'épaisseur de la feuille produite diminue du fait, notamment, de l'utilisation d'un plus grand nombre de molettes sur une plus grande largeur du ruban. Le rendement géométrique (taux de verre restant après découpage des bandes latérales marquées) est ainsi particulièrement faible pour les faibles épaisseurs de verre.

Suivant un autre procédé ayant fait l'objet du brevet FR 1 378 839 et de ses additions numéros 86.221, 86.222, 86.817, 87.798 et 91.543, du brevet FR 2 123 096 et du brevet FR 2 150 249, on utilise des éléments mobiles de guidage, continus et souples (par exemple des fils de métal) qui adhèrent au verre sur les bords latéraux du ruban et accompagnent ledit ruban dans son mouvement sur le bain. Ce procédé est plus économique que le procédé utilisant des molettes et la striction observée est également beaucoup plus faible. Cependant, pour des faibles épaisseurs, le procédé tel que décrit dans les brevets précédemment cités ne permet pas non plus d'obtenir une qualité satisfaisante, les feuilles de verre obtenues ne présentant pas, notamment, une épaisseur constante (observation d'un « profil en creux » avec un amincissement de la feuille au centre).

La présente invention propose un procédé de fabrication de verre en feuille par flottage, ce procédé ne présentant pas les inconvénients précédemment cités. En particulier, la présente invention propose un procédé économique adapté à la fabrication de feuilles de verre minces par flottage et permettant d'obtenir des feuilles de verre minces présentant notamment une qualité optique satisfaisante et une épaisseur constante.

Dans le procédé selon l'invention, on déverse du verre fondu sur un support liquide plus dense que le verre, notamment un bain métallique (par exemple de l'étain fondu ou un alliage d'étain), puis on étire le ruban de verre qui se forme et on l'accompagne dans son mouvement à l'aide d'éléments de guidage continus et souples faits d'un matériau solide susceptible d'adhérer au verre fondu, ces éléments étant mis au contact des bordures latérales du ruban, ce procédé étant caractérisé en ce que le produit (P) de la valeur (v) de la vitesse du ruban et de la valeur (e) de son épaisseur finale est inférieur à 2.5.10⁻⁴m².s⁻¹.

Dans le procédé selon l'invention, la valeur (v) de la vitesse du ruban (mesurée au sortir du bain) est choisie en fonction de la valeur (e) de l'épaisseur finale que l'on désire obtenir pour le ruban de façon à ce que le produit (P = e x v) n'excède pas 2,5.10⁻⁴m².s⁻¹, de préférence 2.10⁻⁴m²s.⁻¹ et de façon particulièrement préférée 1,5.10⁻⁴m².s⁻¹, voire 1.10⁻⁴m²s.⁻¹ ou 9.10⁻⁵ m².s⁻¹ (en pratique, il peut descendre à 1.10⁻⁵m².s⁻¹ ou encore moins). Par ailleurs, la vitesse du ruban est préférentiellement maintenue inférieure à 15 m.min⁻¹, de façon particulièrement préférée inférieure à 10 m.min⁻¹, quelle que soit l'épaisseur finale du ruban désirée. Le procédé selon l'invention est particulièrement adapté à la fabrication de feuilles de verre minces d'épaisseur inférieure à 6 mm, préférentiellement inférieure à 4 mm, en particulier d'épaisseur inférieure à 3 mm, ce procédé permettant, en imposant une vitesse (v) maximale relativement faible pour une épaisseur donnée (e) de ruban, d'obtenir des feuilles de verre minces présentant une épaisseur constante (on évite l'obtention d'un profil en creux) et une qualité optique satisfaisante. Par « épaisseur finale » du ruban on entend l'épaisseur (moyenne) du ruban après détachement des éléments de guidage ou encore l'épaisseur du ruban figé par refroidissement. L'épaisseur finale du ruban de verre obtenu selon l'invention peut être très inférieure à 2 mm, cette épaisseur pouvant descendre jusqu'à 0,4 mm ou moins.

Ainsi, selon un mode de réalisation de l'invention, lorsque l'on souhaite obtenir un ruban d'épaisseur finale égale à 2 mm, la vitesse du ruban est choisie inférieure à 7,5 m.min⁻¹ et, de préférence, inférieure à 6 m.min⁻¹, de façon particulièrement préférée inférieure à 4,5 m.min⁻¹, voire à 3 m.min⁻¹, voire même à 1 m.min⁻¹ ou à 0,5 m.min⁻¹. Cette limitation de vitesse peut également être observée avantageusement pour des rubans d'épaisseur finale inférieure à 2 mm.

Selon un autre mode de réalisation de l'invention, lorsque l'on souhaite obtenir un ruban d'épaisseur finale égale à 4 mm, la vitesse du ruban est choisie inférieure à 3,75 m.min⁻¹, de préférence inférieure à 3 m.min⁻¹, voire à 2,25 m.min⁻¹, voire même à 1,5 m.min⁻¹ ou à 0,5 m.min⁻¹. Cette limitation de vitesse peut également être observée avantageusement pour des rubans d'épaisseur finale comprise entre 2 et 4 mm.

Dans le procédé selon l'invention, par le réglage du débit et/ou de la largeur du ruban de verre, il est tout à fait possible de maintenir la vitesse du ruban inférieure aux valeurs précitées pour obtenir les épaisseurs indiquées. Les produits réalisés présentent ainsi une épaisseur constante et une qualité améliorée par rapport aux produits de même épaisseur obtenus à l'aide des procédés connus précédemment commentés dans lesquels les vitesses de défilement des rubans sont bien plus élevées pour ces épaisseurs, ces vitesses étant d'autant plus importantes que l'épaisseur des produits recherchée est faible.

Les éléments de guidage selon l'invention peuvent être constitués par un fil ou un assemblage de fils, éventuellement torsadés, une tresse, un grillage, un ruban, une chaînette, etc... en métal ou en alliage de métaux ou en un matériau non métallique approprié, notamment sur le modèle des éléments de guidage décrits dans le brevet FR 1 378 839 et ses additions, dans le brevet FR 2 123 096 et dans le brevet FR 2 150 249 auxquels on se référera pour plus d'informations sur ces éléments de guidage et leurs avantages. Les éléments de guidage selon l'invention peuvent être notamment des fils métalliques de type courant, notamment des fils en acier inoxydable ou en alliage réfractaire, présentant, par exemple, un diamètre de 1 à 2 mm environ.

Ces éléments de guidage sont généralement tendus entre des dispositifs tels que dévidoirs, rouleaux ou bobines en rotation, etc... situés en amont et en aval du bain et sont placés au contact du ruban de verre par l'intermédiaire de pièces d'appui ou « pastilles » (sous forme de galets presseurs, rouleaux, barrettes, etc...) ou de conduits d'introduction. Pour assurer l'entraînement et l'étirage du ruban, il est suffisant que les éléments de guidage adhèrent simplement en surface du verre, ces éléments peu encombrants étant en outre avantageusement placés très près des bords du ruban, évitant ainsi une perte de matière importante après découpage des parties marquées par les éléments de guidage.

On utilise préférentiellement deux éléments de guidage situés de part et d'autre du ruban, chacun de ces éléments se trouvant sur un des bords latéraux du ruban. Les éléments de guidage peuvent éventuellement être chauffés pour améliorer leur mouillage par le verre et éviter qu'ils ne se détachent du verre, ce chauffage n'étant cependant pas nécessaire, en règle générale, selon la présente invention. On utilise également préférentiellement deux pièces d'appui disposées en regard l'une de l'autre par rapport au ruban de verre, chacune servant à l'insertion d'un élément de guidage en surface du verre. Les pièces d'appui sont réalisées de manière à résister à l'usure due au frottement des éléments de guidage et à la corrosion par le verre en fusion. Elles sont réalisées par exemple en molybdène ou tungstène recouvert d'une couche d'alumine et peuvent être fixées à des supports permettant un réglage de leur position. Des conduits ou guide-fils, éventuellement chauffés, peuvent également être utilisés pour amener les éléments de guidage sous un certain angle au niveau des pièces d'appui.

Les éléments de guidage peuvent contribuer à l'élaboration du ruban à partir de la masse de verre déversée sur le bain, au mouvement de ce ruban ainsi qu'à son étirage. Ils sont généralement mis au contact du verre en amont de la formation du ruban de verre dans la zone du flot de verre déversé qui forme ensuite les bords du ruban, ou au moment de la formation du ruban de verre ou aussitôt après cette formation, sur le modèle des procédés décrits dans le brevets FR 1 378 839 et ses additions, FR 2 123 096 et FR 2 150 249, et peuvent être détachés du verre lorsque celui-ci est parvenu à un stade du procédé où son refroidissement lui confère une rigidité suffisante.

Entre le moment où il est introduit dans le verre par une pièce d'appui et le moment où il est détaché du verre, chaque élément de guidage selon l'invention passe normalement sur au moins une pièce de retenue (ou « organe écarteur » ou « organe d'écartement » ou « doigt écarteur » ou « organe de positionnement », etc.) se trouvant sur le même bord du bain que ledit élément de guidage. Cette pièce de retenue oblige généralement l'élément de guidage à diverger pour opérer l'étirage transversal progressif du ruban jusqu'à sa largeur et son épaisseur définitives, l'écartement entre les éléments de guidage étant ensuite maintenu jusqu'au refroidissement du verre. Les pièces de retenue sont généralement disposées par paires de part et d'autre de la feuille de verre (de même que les éléments de guidage ou les pièces d'appui) et sont également évoquées dans les brevets précédemment mentionnés auxquels on se rapportera pour plus d'informations sur ces pièces.

De préférence, on utilise deux pièces de retenue disposées en regard l'une de l'autre par rapport au ruban de verre. Ces pièces de retenue peuvent avoir différentes formes : anneaux, crochets, barrettes, baguettes verticales, etc... et sont avantageusement réalisées en un matériau réfractaire résistant à l'usure par les éléments de guidage et à la corrosion, par exemple en molybdène ou en tungstène recouvert d'une couche d'alumine. La position de ces pièces de retenue est préférentiellement réglable, par exemple par l'intermédiaire de bras supports, de façon notamment à pouvoir modifier la largeur du ruban de verre. Les bras supports sont avantageusement réalisés en un matériau présentant une résistance au fluage à chaud. Les pièces de retenue peuvent éventuellement être chauffées pour permettre par exemple au verre de se ressouder après le passage de ces pièces, ce chauffage n'étant pas requis dans le cas habituel où ces pièces sont placées dans une région où la viscosité du verre est inférieure à 50000 Poises. De préférence, les pièces de retenue sont situées dans une zone où le verre présente une viscosité comprise entre 5000 et 50000 Poises. La distance entre les pièces d'appui et les pièces de retenue est également avantageusement réglée de façon à obtenir la vitesse la plus uniforme possible en tout point du ruban au sortir des dernières pièces de retenue. La striction observée après ces pièces de retenue est très faible et est généralement inférieure à 10 %, voire 7 % en largeur (alors que la striction obtenue dans les procédés courants, notamment avec molettes, peut atteindre 50%).

Selon un mode de réalisation préféré de la présente invention, utilisant deux éléments de guidage, deux pièces d'appui et au moins deux pièces de retenue disposés de part et d'autre du ruban de façon approximativement symétrique par rapport au ruban et dans lequel les pièces de retenue obligent les éléments de guidage à diverger pour étirer le ruban à la largeur voulue, l'angle de divergence (c'est-à-dire l'angle mesuré entre l'axe du ruban et la droite passant entre une pièce d'appui et la pièce de retenue la plus proche se trouvant du même côté du ruban) est choisi inférieur, en valeur absolue, à 25° et, de préférence, inférieur à 20° afin de contribuer à l'amélioration de la qualité et de la planéité des feuilles de verre obtenues, un angle supérieur pouvant provoquer un étirage trop brutal du ruban de verre.

De façon également préférée, le verre utilisé dans le procédé selon l'invention est choisi de façon à présenter une vitesse de cristallisation inférieure à 1,5 µm/min (vitesse de croissance des cristaux), de préférence inférieure à 1 µm/min, à une viscosité comprise entre 10000 et 100000 Poises (cette vitesse étant par exemple inférieure à 0,4 et, de préférence, 0,2 µm/min à une viscosité de 10000 Poises) afin d'éviter tout phénomène de dévitrification, notamment au niveau d'éléments tels que les pièces de retenue.

De façon plus générale, ce verre doit remplir toutes les conditions connues de l'homme de l'art pour pouvoir être utilisé dans un procédé de fabrication de feuilles de verre par flottage (il ne doit notamment pas contenir d'arsenic, d'antimoine, de plomb, de fluor, etc.).

Il est possible d'utiliser différents types de verres dans le procédé selon l'invention. Outre des verres habituellement utilisés dans les procédés de flottage (verres silico-sodo-calciques traditionnels), il est possible d'utiliser des verres présentant un palier de travail (différence entre la température du verre à une viscosité de 1000 Poises et la température du verre à une viscosité de 10⁶ Poises) plus court, notamment inférieur à 350°C, en particulier inférieur à 300°C. En effet, le procédé selon l'invention permet de former plus rapidement le verre à son épaisseur finale que les procédés courants utilisant, par exemple, des molettes. Les verres employés jusqu'à présent pour réaliser des feuilles de verre uniquement par des procédés de laminage en raison de leur palier de travail court, peuvent ainsi être utilisés avantageusement dans le procédé de flottage selon l'invention.

Des verres pouvant être utilisés avec avantage dans le procédé selon l'invention sont les verres décrits dans les brevets et demandes de brevet EP 526 272, EP 576 362, FR 2 727 399, FR 2 725 713, FR 2 725 714, WO-96/11888 et WO-96/11887.

Selon un mode de réalisation avantageux de la présente invention, le verre utilisé dans le procédé présente la composition décrite dans la demande WO-96/11887, c'est-à-dire la composition suivante exprimée en pourcentages pondéraux :

| | |
|---|---|
| SiO₂ | 45 à 68 % |
| Al₂O₃ | 0 à 20 % |
| ZrO₂ | 0 à 20 % |
| B₂O₃ | 0 à 10 % |
| Na₂O | 2 à 12 % |
| K₂O | 3,5 à 9 % |
| CaO | 1 à 13 % |
| MgO | 0 à 8 % |

la somme des teneurs en oxydes SiO₂, Al₂O₃ et ZrO₂ demeurant égale ou inférieure à 70 %, la somme des teneurs en oxydes Al₂O₃ et ZrO₂ étant égale ou supérieure à 20 %, la somme des teneurs des oxydes alcalins Na₂O et K₂O étant supérieure ou égale à 8 %, ladite composition comprenant éventuellement les oxydes BaO et/ou SrO dans des proportions telles que : 11 % ≤ MgO + CaO + BaO + SrO ≤ 30 % et ladite composition présentant une température inférieure de recuisson (stain point) égale ou supérieure à environ 530°C et un coefficient de dilatation (α_{25-300°c}) compris entre 80 et 95.10⁻⁷/°C.

Ce verre est particulièrement avantageux dans le procédé de l'invention pour la fabrication de feuilles de verre minces résistant à la chaleur et destinées notamment à la réalisation d'écran plasmas.

Selon un autre mode de réalisation, le verre utilisé dans le procédé de l'invention présente la composition décrite dans la demande de brevet WO-96/11888, c'est-à-dire la composition suivante exprimée en pourcentages pondéraux :

| | |
|---|---|
| SiO₂ | 45 à 65 % |
| Al₂O₃ | 0 à 20 % |
| ZrO₂ | 0 à 20 % |
| B₂O₃ | 0 à 5 % |
| Na₂O | 4 à 12 % |
| K₂O | 3,5 à 12 % |
| CaO | 0 à 13 % |
| MgO | 0 à 8 % |

la somme des teneurs en oxydes SiO₂, Al₂O₃ et ZrO₂ demeurant égale ou inférieure à 70 %, ladite composition comprenant éventuellement les oxydes Ba et/ou SrO dans des proportions telles que : 11 % ≤ MgO + CaO + BaO + SrO ≤ 24 % et les oxydes alcalins étant introduits selon des pourcentages pondéraux tels que 0,22 ≤ Na₂O/(Na₂O + K₂O) ≤ 0,60.

Ce verre est particulièrement avantageux dans le procédé de l'invention pour la fabrication de feuilles de verre minces destinées à être utilisées comme support dans une unité de stockage de données (réalisation, par exemple, de disques utilisés comme mémoires périphériques dans le domaine de l'informatique).

Le verre est généralement déversé sur le bain à une température comprise entre 1100 et 1400°C (cette température étant plus élevée d'environ 40 à 100°C que les températures utilisées dans les procédés utilisant des molettes, cette température plus élevée contribuant à améliorer la planéité des feuilles obtenues) et doit présenter à ces températures une viscosité comprise préférentiellement entre 1000 et 6000 Poises. Dans la suite du parcours sur le bain, le ruban est normalement soumis à un refroidissement progressif jusqu'à ce qu'il atteigne une rigidité suffisante pour être retiré du bain par des moyens mécaniques sans subir de dommages susceptibles d'affecter sa planéité et son poli de surface. Il est traditionnellement recuit dans une arche de recuisson et/ou soumis à d'autres traitements. Il est ensuite découpé aux dimensions requises.

De manière générale, avec le procédé selon l'invention, on observe que :
- les produits obtenus présentent une épaisseur relativement constante. A titre d'exemple, dans de nombreux cas, la variation d'épaisseur des feuilles de verre n'excède pas 70 µm, ou encore n'excède pas 6 % et, de préférence 3 %, voire 1,5 % de l'épaisseur de la feuille de verre,
- en matière de qualité optique, le verre obtenu présente une valeur de zébra très bonne (supérieure ou égale à 50°) supérieure aux valeurs obtenues pour les verres réalisés selon les procédés courants (de l'ordre de 40-45° pour les procédés utilisant des molettes). En équivalent puissance optique, une valeur de zébra de 40-45° équivaut à 20-23 millidioptries et une valeur de zébra de 50° équivaut à 15 millidioptries.

Par ailleurs, si certains défauts de surface (dioptriques ou à faces parallèles) des verres obtenus selon le procédé de l'invention sont similaires à ceux des verres obtenus selon les procédés courants, on observe en revanche que le verre obtenu selon le procédé de l'invention ne présente pas ou peu de défauts d'ondulation typiques de l'étirage des installations à forte vitesse. Le verre obtenu ne présente pas non plus de défauts d'étain observés dans les procédés traditionnels, du fait de la formation rapide du verre dans le procédé selon l'invention.

Comme indiqué précédemment, la striction du ruban de verre est également très faible et n'entraîne pas de défauts optiques.

La qualité optique des verres obtenus selon l'invention semble donc au moins égale voire supérieure à celle des verres obtenus selon les procédés courants.
- le procédé selon l'invention est plus économique que le procédé traditionnel utilisant des molettes. A titre indicatif, la puissance nécessaire pour le fonctionnement d'une installation ayant un débit de 10 à 20 t/j de verre et fonctionnant selon l'invention est de l'ordre de 90 kW alors que pour une installation de même débit utilisant entre 2 et 12 paires de molettes selon un procédé courant, la puissance nécessaire est en moyenne de 240 kW.
- le procédé selon l'invention présente un meilleur rendement géométrique que les procédés courants utilisant des molettes. La largeur de chaque bande latérale ôtée n'excède généralement pas 30 mm quelle que soit la largeur du ruban (le rendement géométrique est ainsi généralement supérieur à 70 % en volume) alors que la largeur de chaque bande latérale ôtée dans le procédé avec molettes excède souvent 60 mm (rendement géométrique généralement inférieur à 60 % en volume). Du fait également de la largeur moins importante de ces bandes latérales présentant une épaisseur différente de celle du reste du ruban, le ruban obtenu selon l'invention ne présente pas de difficultés de recuisson.

Outre le procédé précédemment explicité, l'invention a pour objet des dispositifs propres à mettre en oeuvre le procédé selon l'invention, selon la revendication indépendante 7 et les revendications dépendantes 8 et 9. De tels dispositifs déjà explicités en grande partie dans l'exposé précédent de l'invention sont également illustrés ci-après, au travers d'un exemple non limitatif en référence à la figure annexée qui représente une vue schématique partielle en plan d'une installation suivant l'invention. Des dispositifs particulièrement adaptés à la mise en oeuvre du procédé selon l'invention sont des dispositifs présentant un angle de divergence tel que défini précédemment.

Les dispositifs selon l'invention sont préférentiellement des installations de faible débit (moins de 200 t/j, voire moins de 100 t/j, voire même moins de 50 t/j ou moins de 25 t/j) et de faible longueur. La formation très rapide du verre à son épaisseur définitive permet, le cas échéant, d'utiliser des installations plus courtes que les installations courantes. Les pertes d'énergie sont plus faibles et la consommation d'énergie moins importante que dans les installations habituelles utilisant des molettes et le taux d'utilisation de la surface du bain est amélioré (c'est-à-dire que le bain est recouvert dans la plus grande partie de sa largeur par le verre) du fait de l'utilisation des éléments de guidage peu encombrants, ceci permettant, dans le cas de l'utilisation d'un bain d'étain, d'éviter les envols d'étain.

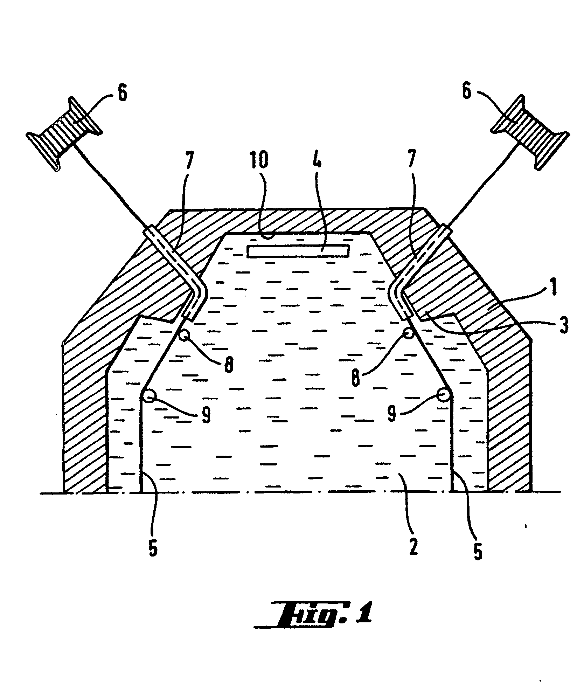

Comme représenté figure 1, l'installation comporte généralement un bassin dont une partie de l'enceinte est représentée en 1, ce bassin contenant un bain métallique 2 tel que par exemple un bain d'étain. La partie amont de ce bassin peut comporter des rives divergentes ou « restrictors » 3 dans le sens d'avancement du verre. Les moyens de chauffage du bassin ne sont pas représentés.

Le verre fondu est amené à l'extrémité amont du bassin dans la zone figurée en 4. Le verre ainsi déversé s'étale sur le bain entre les rives divergentes sous l'action de la gravité et de la traction exercée en aval. On introduit alors par la face supérieure, dans les bords de la nappe, avant que celle-ci ait quitté les rives divergentes, ou immédiatement après, des fils 5 (les éléments de guidage) provenant par exemple de dévidoirs 6. Chaque fil peut être amené par un conduit 7 qui lui impose un changement de direction, cette disposition permettant de situer les dévidoirs latéralement par rapport au four et d'amener le fil dans la position voulue, puis rencontre une pièce d'appui 8 qui le soumet à un effort dirigé vers le bas pour l'insérer dans le verre.

En aval de la zone de nappage se trouvent des pièces de retenue 9 qui obligent les fils à diverger puis les empêchent de se rapprocher sous l'action de forces de tension superficielles. Les fils prennent appui sur ces pièces de retenue et maintiennent la nappe à la largeur correspondant à l'épaisseur finale à obtenir. Les fils accompagnent le ruban pendant son refroidissement dans la zone aval du bain jusqu'à ce que le ruban soit suffisamment rigide (la température du ruban étant par exemple inférieure à 600°C).

Le dispositif selon l'invention peut présenter toute variante à la portée de l'homme du métier, ces modifications pouvant se faire notamment sur le modèle des dispositifs décrits dans les brevets précédemment cités.

D'autres caractéristiques et avantages de l'invention ressortiront des exemples suivants donnés à titre illustratif mais non limitatifs.

### EXEMPLE 1

Dans un four de flottage du type représenté sur la figure jointe, alimenté par un four de fusion du verre d'un débit de 8 à 12 kg/h de verre fondu, on a disposé les organes permettant de mettre en oeuvre le procédé de l'invention en vue de la fabrication de verre d'épaisseur égale ou inférieure à 2 mm. Les éléments de guidage sont constitués par deux fils en acier doux recuit blanc ou recuit noirci de 1,5 mm de diamètre.

Le verre utilisé a la composition suivante exprimée en pourcentages pondéraux :

| | |
|---|---|
| SiO₂ | 54,6 % |
| Al₂O₃ | 3 % |
| CaO | 3,5 % |
| MgO | 4,2 % |
| Na₂O | 6 % |
| K₂O | 6,9 % |
| BaO | 3,8 % |
| ZrO₂ | 10 % |
| SrO | 8 % |

La température du verre au déversoir est de l'ordre de 1320°C, les fils sortent des guide-fils au niveau du talon de mouillage arrière 10, les pièces d'appui se situent à chaque pointe des rives divergentes, les pièces de retenue se trouvent à 290 mm environ du talon de mouillage arrière et à 250 mm environ des pièces d'appui et l'écartement entre les doigts est de 160 mm pour une vitesse de fil de 20 m/h et une épaisseur finale de ruban de 1,1 mm.

On constate que le verre obtenu est très plat (la flèche sur une longueur de 5 cm est de l'ordre de 15 µm et la variation d'épaisseur est inférieure à 6 %). Lorsque l'on fait varier l'épaisseur du ruban, on constate que, contrairement aux procédés habituels utilisant des molettes, la qualité optique du ruban augmente lorsque l'épaisseur diminue.

### EXEMPLE 2

Sur un four de flottage, tel que celui de l'exemple 1, on utilise le verre de composition suivante, exprimée en pourcentages pondéraux :

| | |
|---|---|
| SiO₂ | 50,25 % |
| Al₂O₃ | 12,5 % |
| CaO | 5 % |
| MgO | 4,2 % |
| Na₂O | 5,3 % |
| K₂O | 6,2 % |
| BaO | 5,95 % |
| ZrO₂ | 3% |
| SrO | 7,6 % |

Pour des vitesses du ruban de respectivement 15 m/h, 22 m/h et 27 m/h avec une largeur entre les pièces de retenue de respectivement 135 mm, 130 mm et 140 mm, on produit un verre de respectivement 1,6 mm, 1,1 mm et 0,9 mm d'épaisseur présentant une variation d'épaisseur respectivement de 70 µm, 70 µm et 50 µm sur 6,5 cm de largeur. La variation d'épaisseur dans la longueur n'excède pas 20 µm sur 6 cm de long.

On remarque qu'en changeant l'angle de divergence de 17 à 11° avec une température aux pièces de retenue de l'ordre de 1130°C, on obtient une variation d'épaisseur plus faible.

Le procédé selon l'invention permet de fabriquer des feuilles de verre minces utilisables dans le domaine de l'automobile, de l'électronique, des écrans plasma, des disques durs magnétiques, etc.

## Revendications

1. Procédé de fabrication par flottage de feuilles de verre selon lequel on déverse du verre fondu sur un support liquide (2) plus dense que le verre, puis on étire le ruban de verre qui se forme et on l'accompagne dans son mouvement à l'aide d'éléments de guidage continus et souples (5) faits d'un matériau solide susceptible d'adhérer au verre fondu, ces éléments (5) étant mis au contact des bordures latérales du ruban, **caractérisé en ce que** le produit (P) de la valeur (v) de la vitesse du ruban et de la valeur (e) de son épaisseur finale est inférieur à 2,5.10⁻⁴m².s⁻¹.

2. Procédé selon la revendication 1, **caractérisé en ce que** la vitesse du ruban est inférieure à 15 m.min⁻¹.

3. Procédé selon l'une des revendications 1 ou 2, **caractérisé en ce qu'**on utilise un verre présentant une vitesse de cristallisation inférieure à 1,5 µm/min à une viscosité comprise entre 10000 Poises et 100000 Poises.

4. Procédé selon l'une des revendications 1 à 3, **caractérisé en ce que** le rendement géométrique est supérieur à 70 % en volume.

5. Procédé selon l'une des revendications 1 à 4, **caractérisé en ce que** chaque élément de guidage (5) est amené au contact du verre par l'intermédiaire d'au moins une pièce d'appui (8) puis passe sur au moins une pièce de retenue (9) l'obligeant à diverger pour assurer l'étirage transversal progressif du ruban jusqu'à sa largeur définitive, l'angle de divergence, correspondant à l'angle mesuré entre l'axe du ruban et la droite passant entre une pièce d'appui (8) et la pièce de retenue (9) la plus proche se trouvant du même côté du ruban, étant inférieur à 25°.

6. Procédé selon l'une des revendications 1 à 5, **caractérisé en ce que** la striction est inférieure à 10 % en largeur.

7. Installation pour la mise en oeuvre du procédé selon les revendications 1 à 6, comprenant un support liquide (2) plus dense que le verre et un moyen de déversement du verre fondu sur ce support liquide et, pour l'étirage et l'accompagnement du ruban de verre formé, des éléments de guidage continus et souples (5) faits d'un matériau solide susceptible d'adhérer au verre fondu, **caractérisée en ce qu'**elle comprend, pour chaque élément de guidage, au moins une pièce d'appui (8) pour amener ledit élément de guidage au contact du verre et une pièce de retenue (9) pour obliger ledit élément de guidage à diverger pour assurer l'étirage transversal progressif du ruban jusqu'à sa largeur définitive, l'angle de divergence, correspondant à l'angle mesuré entre l'axe du ruban et la droite passant entre une pièce d'appui (8) et la pièce de retenue (9) la plus proche se trouvant du même côté du ruban, étant inférieur à 25°.

8. Application du procédé selon l'une des revendications 1 à 6 à la fabrication de feuilles de verre d'épaisseur inférieure à 6 mm.

9. Feuille de verre obtenue par flottage et constituée d'un verre présentant un palier de travail, correspondant à la différence entre la température du verre à une viscosité de 1000 Poises et la température du verre à une viscosité de 10⁶ Poises, inférieur à 350°C.

## Patentansprüche

1. Verfahren zur Herstellung von Glasscheiben nach dem Floatglasprinzip, gemäß welchem Glasschmelze auf einen flüssigen Träger (2) gegossen wird, der dichter als diese ist, und anschließend das sich bildende Glasband gezogen und bei seiner Bewegung von nachgiebigen, endlosen Führungselementen (5) begleitet wird, die aus einem festen Material hergestellt sind, das in der Lage ist, an der Glasschmelze zu haften, wobei diese Elemente (5) mit den Seitenrändern des Glasbandes in Berührung gebracht werden, **dadurch gekennzeichnet, dass** das Produkt (P) aus Geschwindigkeit (v) des Glasbandes und dessen endgültiger Dicke (e) weniger als 2,5·10⁻⁴ m²·s⁻¹ beträgt.

2. Verfahren nach Anspruch 1, **dadurch gekennzeichnet, dass** die Geschwindigkeit des Glasbandes weniger als 15 m·min⁻¹ beträgt.

3. Verfahren nach Anspruch 1 oder 2, **dadurch gekennzeichnet, dass** ein Glas verwendet wird, das eine Kristallisationsgeschwindigkeit von weniger als 1,5 µm/min bei einer Viskosität von 10 000 bis 100 000 Poise besitzt.

4. Verfahren nach einem der Ansprüche 1 bis 3, **dadurch gekennzeichnet, dass** die geometrische Ausbeute mehr als 70 Vol.-% beträgt.

5. Verfahren nach einem der Ansprüche 1 bis 4, **dadurch gekennzeichnet, dass** das jeweilige Führungselement (5) über mindestens ein Auflageteil (B) mit der Glasschmelze in Berührung gebracht wird und anschließend über mindestens ein Halteteil (9) weiterläuft, das es zwingt, auseinanderzugehen, um das fortschreitende seitliche Ausziehen des Glasbandes bis zu dessen endgültiger Breite sicherzustellen, wobei der Divergenzwinkel, der dem Winkel entspricht, der zwischen der Achse des Glasbandes und der Geraden gemessen wird, die zwischen einem Auflageteil (8) und dem Halteteil (9), das sich am nächsten auf derselben Seite des Glasbandes befindet, hindurchgeht, weniger als 25° beträgt.

6. Verfahren nach einem der Ansprüche 1 bis 5, **dadurch gekennzeichnet, dass** die Querschnittsverminderung in der Breite weniger als 10 % beträgt.

7. Vorrichtung zur Durchführung des Verfahrens nach den Ansprüchen 1 bis 6, die einen flüssigen Träger (2), der dichter als die Glasschmelze ist, ein Mittel zum Gießen dieser darauf und, zum Ausziehen und Begleiten des geformten Glasbandes, nachgiebige, endlose Führungselemente (5), die aus einem festen Material hergestellt sind, das in der Lage ist, an der Glasschmelze zu haften, umfasst, **dadurch gekennzeichnet, dass** sie für das jeweilige Führungselement mindestens ein Auflageteil (8), um dieses Führungselement mit der Glasschmelze in Berührung zu bringen, und ein Halteteil (9) umfasst, um das Führungselement zu zwingen, auseinanderzugehen, um das fortschreitende seitliche Ausziehen des Glasbandes bis zu dessen endgültiger Breite sicherzustellen, wobei der Divergenzwinkel, der dem Winkel entspricht, der zwischen der Achse des Glasbandes und der Geraden gemessen wird, die zwischen einem Auflageteil (8). und dem Halteteil (9), das sich am nächsten auf derselben Seite des Glasbandes befindet, hindurchgeht, weniger als 25° beträgt.

8. Anwendung des Verfahrens nach einem der Ansprüche 1 bis 6 auf die Herstellung von Glasscheiben mit einer Dicke von weniger als 6 mm.

9. Glasscheibe, die durch das Floatglasverfahren hergestellt ist und aus einem Glas besteht, das einen Arbeitsbereich besitzt, welcher der Differenz zwischen der Glastemperatur bei einer Viskosität, von 1 000 Poise und der Glastemperatur bei einer Viskosität von 10⁶ Poise entspricht und dabei kleiner als 350 °C ist.

## Claims

1. Method for the manufacture by floating of glass sheets, according to which molten glass is poured onto a liquid support (2) more dense than the glass and then the glass ribbon formed is drawn and is accompanied in its movement with the aid of continuous, flexible guide elements (5) made from a solid material able to adhere to the molten glass, said elements (5) being contacted with the lateral borders of the ribbon, **characterized in that** the product (P) of the value (v) of the ribbon speed and the value (e) of its final thickness is below 2.5·10⁻⁴m².s⁻¹.

2. Method according to claim 1, **characterized in that** the ribbon speed is below 15 m.min⁻¹.

3. Method according to one of the claims 1 or 2, **characterized in that** use is made of a glass having a crystallization rate below 1.5 µm/min at a viscosity between 10,000 and 100,000 poises.

4. Method according to one of the claims 1 to 3, **characterized in that** the geometrical efficiency exceeds 70 vol.%.

5. Method according to one of the claims 1 to 4, **characterized in that** each guide element (4) is brought into contact with the glass by means of at least one support part (8) and then passes onto at least one retaining part (9) making it diverge in order to ensure the progressive, transverse drawing of the ribbon to its final width, the divergence angle, corresponding to the angle measured between the axis of the ribbon and the straight line passing between a support part (8) and the closest retaining part (9) on the same side of the ribbon,is below 25°.

6. Method according to one of the claims 1 to 5, **characterized in that** the transverse contraction is below 10% in width.

7. Installation for implementing the method according to claims 1 to 6, comprising a liquid support (2) denser than the glass and a means for pouring the molten glass onto the liquid support and, for drawing and accompanying the glass ribbon formed, continuous, flexible guide elements (5) made from a solid material able to adhere to the molten glass, **characterized in that** it comprises, for each guide element, at least one support part (8) for bringing said guide element into contact with the glass and a retaining part (9) in order to make said guide element diverge in order to ensure the progressive, transverse drawing of the ribbon to its final width, the divergence angle, corresponding to the angle measured between the axis of the ribbon and the straight line passing between a support part (8) and the closest retaining part (9) located on the same side of the ribbon, being less than 25°.

8. Application of the method according to one of the claims 1 to 6 to the production of glass sheets with a thickness below 6 mm.

9. Glass sheet obtained by floating and constituted by a glass having a working range, corresponding to the difference between the temperature of the glass at a viscosity of 1,000 poises and the temperature of the glass at a viscosity of 10⁶ poises, below 350°C.
